# EUROPÄISCHE PATENTSCHRIFT

(11) **EP 1 601 473 B1**
(45) Veröffentlichungstag und Bekanntmachung des Hinweises auf die Patenterteilung: **03.10.2007**
(21) Anmeldenummer: 04713527.2
(22) Anmeldetag: 23.02.2004
(51) Int. Cl.: B08B 9/04, F16L 55/46

(54) **ROHRREINIGUNGSSYSTEM MIT SICHERHEITSEINRICHTUNG**
PIPE CLEANING SYSTEM COMPRISING A SAFETY DEVICE
SYSTEME DE NETTOYAGE DE TUYAU COMPRENANT UN DISPOSITIF DE SECURITE

(30) Priorität: 13.03.2003 DE 10311066
(43) Veröffentlichungstag der Anmeldung: 07.12.2005
(73) Patentinhaber: Schwing GmbH, 44647 Herne (DE)
(72) Erfinder: KREHL, Dietmar, 44265 Dortmund (DE)
(74) Vertreter: GROSSE BOCKHORNI SCHUMACHER
(86) Internationale Anmeldenummer: PCT/EP2004/001773
(87) Internationale Veröffentlichungsnummer: WO 2004/080618

(56) Entgegenhaltungen:
- US-A- 2 713 909
- US-A- 3 063 079
- US-A- 4 373 225

## Beschreibung

Die vorliegende Erfindung betrifft ein Rohrreinigungssystem für Förderleitungen mit den Merkmalen des Oberbegriffs des Patentanspruchs 1. Im engeren Sinne bezieht sie sich auf eine Sicherheitseinrichtung für Benutzer des Rohrreinigungssystems, und auf von Dickstoffpumpen gespeiste Förderleitungen.

Dickstoffpumpen werden insbesondere zum Fördern von Beton seit langer Zeit eingesetzt. In der Regel sind sie als hydraulisch betriebene Kolbenpumpen, zumeist zweizylindrig, ausgeführt, welche den Beton durch Schläuche oder Rohre fördern. Im Folgenden wird vereinfacht stets von Betonförderung die Rede sein. Die Erfindung beschränkt sich jedoch nicht auf die Anwendung bei Betonförderpumpen, sondern kann für sämtliche ähnlichen Rohrreinigungssysteme bei Dickstoffpumpen verwendet werden.

Eine besondere Bauform dieser Betonpumpen wird auf mit einem Mast oder dgl. ausgestattete Kraftfahrzeuge aufgebaut. Solche Betonpumpen sind im Zusammenhang mit der Erfindung von besonderem Interesse, da bei diesen Geräten das Problem besteht, den nach Beenden des Pump- bzw. Fördervorgangs in den Förderleitungen stehen bleibenden Beton bei ausgefahrenem Mast aus den Förderleitungen zu drücken und diese für die nächste Förderung frei durchgängig zu halten. Je nach Stellung, Länge und Höhe des Mastes und der Förderleitungen stehen dabei am Pumpenausgang Drücke bis zu 10 bar an.

Es ist bekannt (DE-A1-29 27 324), zu diesem Zweck kurz hinter dem Pumpenausgang einen Wisch- oder Reinigungskörper in die Förderleitung einzubringen, der so bemessen ist, dass er den Querschnitt der Förderleitung im wesentlichen ausfüllt und durch Fluiddruck (insbesondere Luftdruck) durch die gesamte Länge der Förderleitung getrieben werden kann. Hierbei schiebt er die zu entfernende Dickstoff-Säule vor sich her. In den meisten Fällen wird ein ballförmiger Reinigungskörper aus relativ weichem Material (z. B. Gummi) verwendet, der eine gute Abdichtung zu den Leitungswänden schafft. Im Folgenden wird der Reinigungskörper deshalb stets kurz als Ball bezeichnet, ohne damit andere Gestaltungen und Materialien auszuschließen.

Zum Einbringen des Balls in die mit relativ hohen Drücken beaufschlagbare Förderleitung ist es erforderlich, diese vorübergehend zu öffnen. Eine bevorzugte Ausführung einer Vorrichtung zum Einbringen des Balls in die Förderleitung ist eine fest in der Förderleitung gleich am Pumpenausgang eingebaute Eintragstation. Diese wird bevorzugt als hydraulisch angetriebener Zweikammer-Schieber ausgebildet. Im normalen Betrieb der Pumpe befindet sich eine Kammer des Schiebers in der Förderleitung, d. h. sie bildet einen kurzen Abschnitt der Förderleitung selbst. Demgegenüber steht die andere Kammer des Schiebers in einer Beschickungs- oder Beladestellung außerhalb der Förderleitung, und der Ball kann von Hand in sie eingelegt werden.

Zum Freischieben oder Ausräumen der Förderleitung von nicht verbrauchtem Dickstoff/Beton wird die den Ball enthaltende Kammer des Schiebers durch Fremdkraft an die Stelle der ersten Kammer gebracht. Dieser Vorgang bedarf eines erheblichen Kraftaufwands, denn ggf. drückt die in der Förderleitung stehende Säule des Dickstoffs unter Schwerkrafteinfluss auf die Seitenwände des Schiebers. Vorzugsweise wird der Schieber mithilfe eines hydraulisch betriebenen Differenzialzylinders hin und her bewegt, jedoch sind auch andere reversierbare Antriebe, z. B. elektrische, möglich. Im Ergebnis wird der Ball in die Förderleitung gebracht, während nun die erste Kammer außerhalb der Förderleitung steht, wo sie ggf. entleert und gereinigt werden kann. Man ersetzt also einen kleinen Abschnitt der noch mit dem bislang geförderten Dickstoff gefüllten Leitung durch einen freien Abschnitt, der nur den Ball zum Entleeren der Förderleitung enthält.

Während des üblichen manuellen Einbringens des Balls besteht ein gewisses Risiko, dass der Fremdkraft-Antrieb des Schiebers unbeabsichtigt eingeschaltet wird. Geschieht dies trotz aller Sicherheitshinweise, die natürlich in der Betriebsanleitung gegeben werden, so ist die Hand der den Ball einlegenden Person gefährdet. Um die Dichtheit der Leitung unabhängig davon sicherzustellen, welcher Leitungsabschnitt des Schiebers gerade wirksam ist, müssen feste Dichtkanten vorgesehen werden, an welchen der Schieber entlang geführt wird.

Es ist zum Verhindern von Unfällen dieser Art bekannt (Betriebsanleitung der SCHWING GmbH zu Art.-Nr. 101 98 516), eine Sicherheitsveniegelung mit mechanisch/manuell zu betätigenden Schiebern in der Hydraulikeinrichtung vorzusehen. Auch dieses System ist jedoch nicht vor Fehlbedienungen sicher.

Denkbar wäre es zwar auch, die Einlegeöffnung so zu gestalten, dass man nicht von Hand in den gefährdeten Bereich fassen kann, z. B. durch Vorschalten eines hinreichend langen Rohrs, durch das der Ball von selbst hineinrollen kann oder mittels einer zusätzlichen Vorrichtung zwangsgeführt eingetragen wird. Eine solche Vorrichtung wäre jedoch beim Entnehmen des Balls hinderlich und würde die erforderliche kompakte Bauweise ungeeignet vergrößern.

Der Erfindung liegt die Aufgabe zu Grunde, ein gattungsgemäßes Rohrreinigungssystem mit einer Sicherheitseinrichtung so weiter zu bilden, dass eine Gefährdung des Bedienpersonals während des Einlegens des Reinigungskörpers praktisch auszuschließen ist.

Diese Aufgabe wird erfindungsgemäß mit den Merkmalen des Patentanspruchs 1 gelöst. Die Merkmale der Unteransprüche geben vorteilhafte Weiterbildungen der Erfindung an.

Bei der Umsetzung der Erfindung ist zu beachten, dass Dickstoffpumpen, insbesondere Betonpumpen, einen sehr harten Betriebseinsatz mit hohem Verschmutzungsgrad aushalten müssen, und dass ggf. Bedienungsanleitungen und Sicherheitsvorschriften nur bedingt eingehalten werden. Dementsprechend robust und zuverlässig, ggf. auch redundant müssen sämtliche Sicherheitseinrichtungen ausgeführt werden.

Es wäre z. B. durchaus denkbar, im Einlegebereich für den Ball eine Lichtschranke oder sonstige direkt wirkende Sensoren (Infrarot, Ultraschall) vorzusehen, welche jeglichen Gegenstand erfassen, der in die Nähe des Schiebers bzw. der überwachten Öffnungen gelangt. Liegt ein solches Erfassungssignal des Sensors vor, so wird dadurch mittelbar oder unmittelbar der Betrieb des Fremdkraftantriebs der Eintragstation unterbrochen. Hierfür können z. B. elektrisch/elektromagnetisch schaltbare Sicherheitsventile in den hydraulischen oder pneumatischen Kreislauf eines Betätigungszylinders eigens eingebaut werden, oder vorhandene Ventile dieser Bauarten in geeigneter Weise deaktiviert werden. Man wird natürlich bevorzugt ein solches Sperr- oder Sicherheitsventil so auslegen, dass es normalerweise geschlossen ist und die Druckmittelzufuhr zum Betätigungszylinder bzw. zum Antrieb der Eintragstation unterbindet. Hierbei kann eine direkte oder indirekte Einwirkung des Sperrventils vorgesehen werden, d. h. dieses kann unmittelbar in einen Speisekreis des Betätigungszylinders eingeschleift sein oder in Gestalt eines Steuerventils ein Hauptventil betätigen.

Ein elektrischer Antrieb kann durch Sperren seiner Stromzufuhr noch einfacher deaktiviert werden, wenn die Sicherungseinrichtung anspricht. Auch hierbei können direkt oder indirekt (Relais, elektronisch) wirkende Schaltmittel vorgesehen werden.

Mit solchen relativ empfindlichen Sensor-Vorrichtungen ist jedoch ein gewisses Beschädigungs- und/oder Fehlfünktionsrisiko im harten Baustelleneinsatz nicht auf Dauer auszuschließen.

Nach einer bevorzugten und noch ausführlicher zu erörternden Ausführungsform der Erfindung wird deshalb mindestens ein bewegliches Verschlussteil an der Eintragstation vorgesehen, dessen Stellung mithilfe mindestens eines Schaltglieds mechanisch erfasst wird. Das Verschlussteil wird vorzugsweise so angeordnet, dass es von Hand geöffnet werden kann und muss, um den Ball in die Eintragstation einzulegen, und nach Einlegen des Balls geschlossen werden muss.

Bevorzugt wird das Verschlussteil in Gestalt einer schwenk- oder schiebebeweglichen Klappe ausgeführt, die die Öffnung zum Einlegen des Balls vollständig oder jedenfalls so weit verschließt, dass in ihrer Schließstellung kein Fremdkörper in die Öffnung gelangen kann. Man könnte aber auch eine abnehmbare Klappe vorsehen.

Befindet sich dieses Verschlussteil in einer auch nur teilweise geöffneten Stellung, so spricht das Schaltglied an und sperrt den Betrieb des Fremdkraftantriebs.

Das Schaltglied kann ein Schalter, ein Sensor oder auch ein Ventil sein. Es ändert seinen Zustand in Abhängigkeit von der Stellung des Verschlussteils, d. h. ein Sensor oder Schalter gibt ein Signal ab, oder ein als Schaltglied dienendes Ventil wird geschlossen oder geöffnet. So kann das Schaltglied auch mit dem Schaltmittel identisch sein, denn gerade ein Ventil kann sowohl eine bestimmte Stellung erfassen als auch in dieser Stellung Einfluss auf den Betrieb des Fremdkraftantriebs nehmen.

Man kann das Schaltglied auch an einer Vorrichtung zum Verriegeln des Verschlussteils vorsehen, so dass es schon dann ansprechen wird, wenn das Verschlussteil nur entriegelt wurde und somit die Möglichkeit besteht, es aus der geschlossenen in seine offene Stellung zu bringen.

In einer vorteilhaften Weiterbildung des erfindungsgemäßen Rohrreinigungssystems wird bei Bedarf nicht nur die Öffnung zum Einlegen oder Entnehmen des Balls überwacht, sondern auch der Bereich, in welchen beim Einlegen des Balls die andere Kammer der Eintragstation eingefahren wird. Dort besteht nämlich grundsätzlich dasselbe Verletzungsrisiko, wenn diese Kammer z. B. in einen Raum hinein gebracht wird, der von einer Schutzhülle nicht vollständig umschlossen ist. Es kann beispielsweise zweckmäßig sein, eine solche Schutzhülle nicht vollständig geschlossen auszuführen, um den eingefahrenen Leitungsabschnitt bequem reinigen zu können.

Hier kann mit einer erfindungsgemäßen Sicherheitseinrichtung verhindert werden, dass Körperteile zwischen der Außenwand der ausfahrenden Rohrkammer und der besagten Schutzhülle eingequetscht werden, und dass während der Reinigungsarbeiten der Antrieb zum Rückstellen der Eintragstation betätigt bzw. reversiert wird.

Man kann dort z. B. ebenfalls ein bewegliches Verschlussteil vorsehen, dessen Schließzustand durch ein Schaltglied direkt oder indirekt überwacht wird. Signalisiert dieses Schaltglied, dass das Verschlussteil geöffnet oder entfernt wurde, so wird der Fremdkraftantrieb deaktiviert oder gesperrt.

Es versteht sich, dass die erfindungsgemäße Einrichtung nicht nur für Eintragstationen mit geradlinig beweglichen Bauteilen, sondern auch für solche mit z. B. rotatorisch beweglichen Bauteilen verwendbar ist.

Außerdem können mehrere der vorstehend erörterten Sicherungselemente zweckmäßig miteinander kombiniert werden, um ggf. ein redundantes System zu bilden. So kann z. B. auch bei Vorhandensein eines Verschlussteils zusätzlich noch ein Sensor zum berührungslosen Erfassen eines in der Gefahrenzone befindlichen Gegenstands oder Körperteils vorgesehen werden.

Weitere Einzelheiten und Vorteile des Gegenstands der Erfindung aus der Zeichnung eines Ausführungsbeispiels und deren sich im Folgenden anschließender eingehender Beschreibung hervor.

Es zeigen in vereinfachter Darstellung
- Fig. 1: eine erste perspektivische Ansicht einer Eintragstation eines erfindungsgemäßen Rohrreinigungssystems bei geschlossener Verschlussklappe;
- Fig. 2: eine zweite Ansicht analog zu Fig. 1 mit geöffneter Verschlussklappe;
- Fig. 3: eine Detailansicht zu Fig. 1 der geschlossenen Verschlussklappe und ihres Sicherungsmechanismus;
- Fig. 4: eine weitere Detailansicht nach Entsicherung der Verschlussklappe;
- Fig. 5: eine Detailansicht zu Fig. 2 der geöffneten Verschlussklappe bei aktiver Sicherung gegen den Betrieb des Antriebs der Eintragstation.

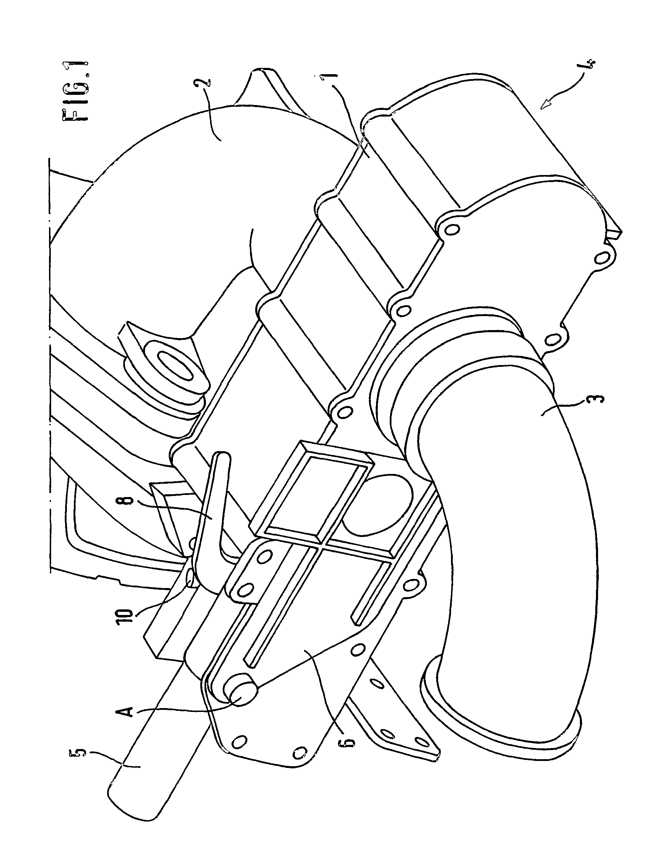

Gemäß Fig. 1 umfasst eine stromab einer nicht gezeigten Dickstoffpumpe eingebaute Eintragstation 1 einen eingangsseitigen Reduzierbogen 2 (zwischen der Pumpe und der Eintragstation 1), einen ausgangsseitigen Rohrbogen 3 (an den sich die zu reinigende Förderleitung -hier weggelassen- anschließt) und ein Schiebergehäuse 4 mit einem an der Antriebsseite befindlichen hydraulischen Betätigungszylinder 5 und einer Verschlussldappe 6. Letztere ist um eine Achse A schwenkbar am Schiebergehäuse 4 gelagert und hier in geschlossener Stellung gezeichnet.

Man erkennt ferner oberhalb der Verschlussklappe 6 einen schwenkbaren Sicherungshebel 8, der seinerseits direkt auf ein Ventil 10 einwirkt. Letzteres bildet ein Schaltglied zum Erfassen einer Offen-Stellung der Verschlussklappe 6. Das Ventil ist in der gezeigten Verriegelungsstellung des Sicherungshebels 8 geöffnet und erlaubt die Druckmittelzufuhr zum Betätigungszylinder 5 (Betriebsstellung).

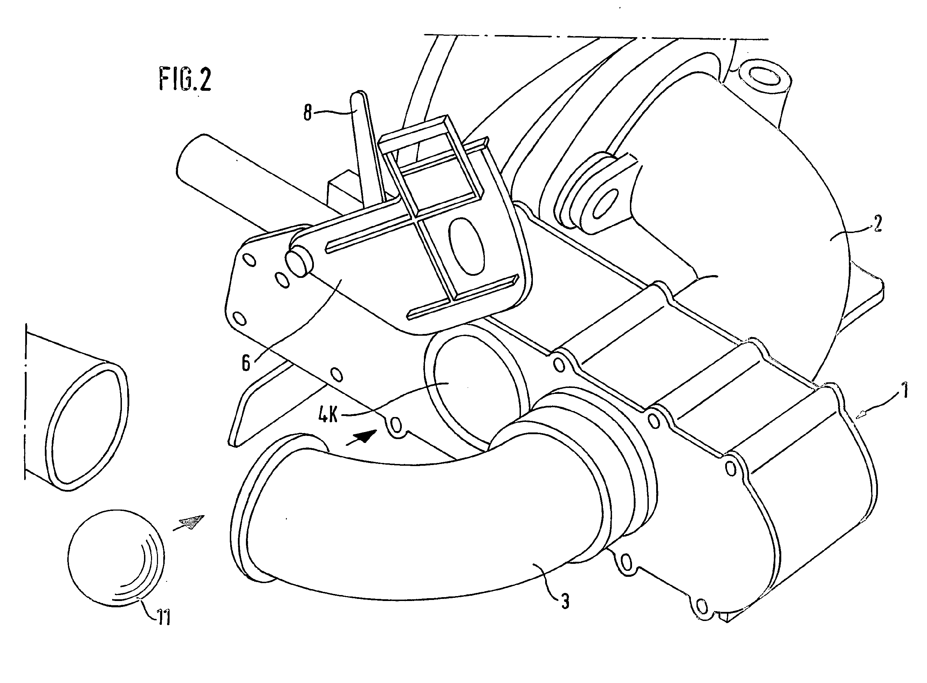

Die Fig. 2 zeigt in gleicher Ansicht wie Fig. 1 die Verschlussklappe 6 in geöffneter Stellung. Hinter ihr ist die rohrförmige Kammer 4K zu erkennen, in die ein Ball 11 eingelegt werden kann, der nach dem Schließen der Verschlussldappe 6 und dem Einfahren der Kammer 4K zwischen die Krümmer 2 und 3 durch Druckmittelzufuhr durch die Förderleitung geführt wird, um diese auszudrücken und zu reinigen. Man erkennt in Fig. 2 auch, dass der Sicherungshebel 8 hoch geschwenkt wurde, um die Verschlussklappe 6 freizugeben. Das Schaltglied oder Ventil 10 ist nun geschlossen und unterbricht die Druckmittelzufuhr zum Betätigungszylinder 5. Die hoch geschwenkte Stellung des Sicherungshebels bildet einen Zustand, der einen Einlege- oder Entnahmevorgang repräsentiert.

Auf der vom Betätigungszylinder 5 abgewandten Seite der Eintragstation - in der Zeichnung unten rechts - erkennt man einen geschlossenen Raum, in den beim Einfahren des Schiebers bzw. der Kammer 4K in die Förderleitung der normalerweise in dieser befindliche Leitungsabschnitt des Schiebers eingefahren wird.

In nicht gezeigter Weise könnte ein an diesem Raum vorzusehendes Verschlussteil in ähnlicher Weise wie die Verschlussklappe 6 der Eintragstation 4 mithilfe eines Schaltglieds überwacht werden, um auch in diesem Bereich Verletzungsrisiken weitestgehend auszuschließen.

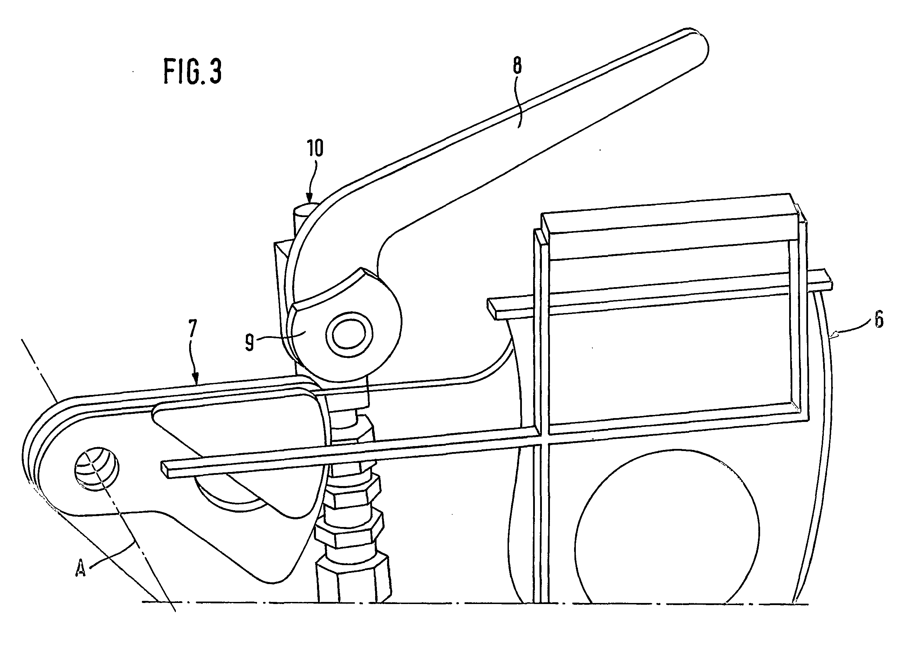

In Fig. 3 ist als Detail eine mögliche Konstellation der Verschlussldappe 6, des Sicherungshebels 8 und des Schaltventils 10 gezeigt. Man erkennt wieder die Achse A der Verschlussklappe 6. Auf deren dem Sicherungshebel 8 zugewandter Flächenseite ist eine Kulissenscheibe 7 fest angeordnet. Diese hat einen etwa dreieckigen Grundriss, wobei die von der Achse A der Verschlussklappe 6 weg gewandte Seite dieses Dreiecks konvex gekrümmt ist.
Die Kulissenscheibe 7 liegt in einer Ebene mit einer an dem Sicherungshebel 8 angeordneten Sichelscheibe 9. Letztere hat einen im Wesentlichen kreisförmigen Umriss, aus dem ein Segment ausgeschnitten ist. Der Mittelpunkt der Sichelscheibe 9 liegt auf der Schwenkachse des Sicherungshebels 8. Die Schnittlinie des aus der Kreisform ausgeschnittenen Segments ist leicht konkav gekrümmt. Sie hat etwa denselben Krümmungsradius wie die konvexe Seite des Dreiecks der Kulissenscheibe 7.

Man erkennt in Fig. 3, dass die Kulissenscheibe 7 gegen die Sichelscheibe 9 anlaufen würde, wollte man die Verschlussklappe 6 um ihre Achse A hoch schwenken. Somit ist die Verschlussklappe 6 in dieser Stellung sicher mechanisch verriegelt, es ist kein Zugang zur Kammer 4K möglich. Selbst wenn der Sicherungshebel geringfügig angehoben würde, änderte sich an der Verriegelung der Verschlussklappe 6 nichts.

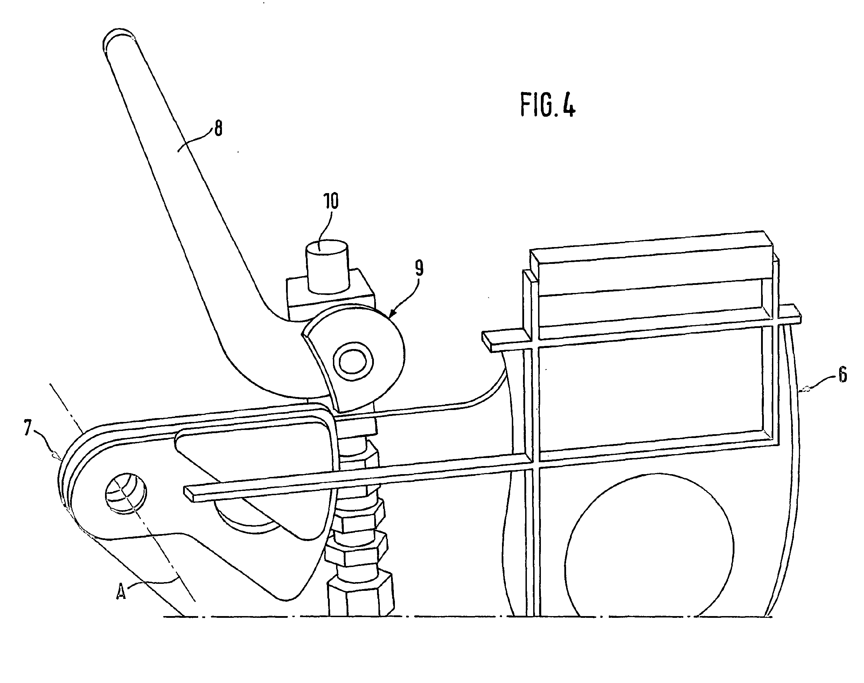

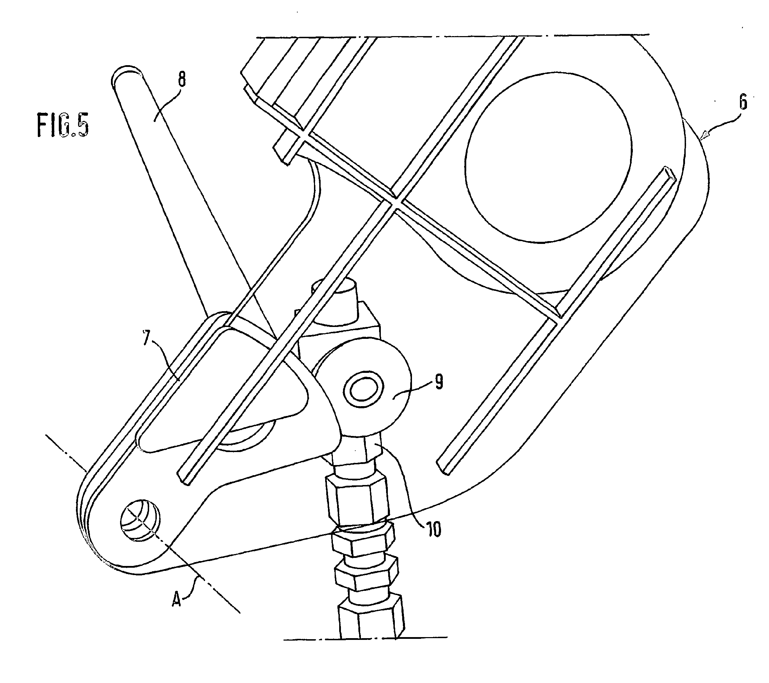

Fig. 4 und 5 zeigen analog zu Fig. 2 die entsicherte, um etwa 90° gegen den Uhrzeigersinn aus der Sicherungsstellung hoch geschwenkte Stellung des Sicherungshebels 8. Man erkennt, dass sich in der konkaven Linie des Segment-Ausschnitts in der Sichelscheibe 9 die Krümmung der konvexen Seite der Kulissenscheibe 7 fortsetzt. Nur in dieser Stellung des Sicherungshebels 8, in der das Ventil 10 geschlossen ist, kann die Verschlussklappe 6 angehoben werden.

Hierbei gleitet die konvexe Seite des Dreiecks der Kulissenscheibe 7 entlang der konkaven Schnittlinie des Segments der Sichelscheibe 9, wie man in Fig. 5 erkennt, die zusätzlich die hoch geklappte Endstellung der Verschlussklappe 6 zeigt. Die konvexe Dreiecks-Seite der Kulissenscheibe liegt so an der konkaven Schnittseite der Sichelscheibe 9 an, dass eine Drehung des Sicherungshebels 8 so lange nicht möglich ist, wie die Verschlussklappe 6 hoch geschwenkt ist. Folglich kann auch das Ventil 10 in der geöffneten Stellung der Verschlussklappe 6 nicht wieder geöffnet werden, was einen Betrieb des Betätigungszylinders 5 ausschließt.

Man kann die Lagerung der Verschlussklappe 6 so gestalten, dass diese sich unter Schwerkraftwirkung selbsttätig schließt, sobald sie losgelassen wird. Zum Einlegen des Balls muss die Verschlussklappe 6 von einer Hand offen gehalten werden, während mit der anderen Hand des Benutzers der Ball eingelegt werden kann.

Man kann aber auch vorsehen, dass die Verschlussklappe 6 in der angehobenen Stellung einrastet und mit leichtem Druck nach unten geschlossen werden muss.
Anstelle der hier gezeigten Schwenkbeweglichkeit der Verschlussklappe 6 um die in Einbaulage horizontale Schwenlcachse A können andere Gestaltungen, z. B. eine um eine vertikale Achse schwenkbare oder eine geradlinig oder entlang einem Bogen verschiebbare Führung der Verschlussklappe vorgesehen werden. Möglich wäre auch, eine abnehmbare Verschlussklappe vorzusehen. Im Wesentlichen werden die in der jeweiligen Einbausituation vorhandenen Bewegungsfreiräume bestimmen, welche Variante letztlich ausgeführt wird.

Ferner kommen anstelle der hier gezeigten rein mechanischen Abtastung der Schließ- und Sicherungsstellung der Verschlussklappe 6 mithilfe des Sicherungshebels 8 und des Ventils 10 auch, wie schon eingangs erwähnt, elektromechanische, elektrische oder elektronische Varianten in Betracht.

Wird z.B. der Betrieb des Betätigungszylinders 5 mithilfe elektrisch schaltbarer Ventile gesteuert, die in Ruhestellung des Zylinders geschlossen sind, so kann mithilfe eines elektrischen Schaltglieds, das die Stellung der Verschlussklappe 6 oder des Sicherungshebels 8 überwacht, die Stromzufuhr zu diesen Ventilen unterbunden werden. So kann kein Druckmittel zum Zylinder gelangen, so lange die Verschlussklappe 6 geöffnet oder der Sicherungshebel 8 angehoben ist.

## Patentansprüche

1. Rohrreinigungssystem für Förderleitungen mit einer Eintragstation (4), die ein durch einen Fremdkraftantrieb (5) bewegliches Bauteil, insbesondere einen Schieber, mit einer Kammer (4K) zum Einlegen eines Reinigungskörpers (11) umfasst, welche Kammer (4K) in einer ersten Stellung sich außerhalb einer Förderleitung (2, 3) befindet und mithilfe des Fremdkraftantriebs in eine zweite Stellung verfahrbar ist, um den in sie eingelegten Reinigungskörper (11) in die Förderleitung (2, 3) einzubringen, wobei Mittel (6, 8, 10) zum Sichern des beweglichen Bauteils gegen seine Bewegung durch den Fremdkraftantrieb während des Einlegens und/oder der Entnahme des Reinigungskörpers (11) vorgesehen sind, **dadurch gekennzeichnet, dass** die Sicherungsmittel mindestens ein den Einlege- oder Entnahmevorgang erfassendes Schaltglied (8) und mindestens ein von letzterem betätigbares Schaltmittel (10) umfassen, das bei einem einen Einlege-/Entnahmevorgang repräsentierenden Zustand oder Signal des mindestens einen Schaltglieds (8) eine Bewegung der Kammer (4K) durch den Fremdkraftantrieb (5) unterbindet.

2. Rohrreinigungssystem nach Anspruch 1, **dadurch gekennzeichnet, dass** das Schaltglied durch mindestens einen Sensor zum Erfassen der Anwesenheit eines Gegenstands in der Umgebung der Einlegeöffnung gebildet ist.

3. Rohrreinigungssystem nach Anspruch 1 oder 2, **dadurch gekennzeichnet, dass** die Sicherungsmittel mindestens ein bewegliches Verschlussteil (6) umfassen, das zum Einlegen oder Entnehmen des Reinigungskörpers (11) aus einer Ruhestellung entfernbar ist, und dass mindestens ein Schaltglied (10) zum Erfassen einer von der Ruhestellung abweichenden Stellung des Verschlussteils (6) vorgesehen ist und in dieser Stellung eine Aktivierung des Fremdkraftantriebs (5) ausschließt.

4. Rohrreinigungssystem nach Anspruch 1, 2 oder 3, **dadurch gekennzeichnet, dass** das Verschlussteil (6) als die Einlege- oder Entnahmeöffnung für den Reinigungskörper (11) verschließender Deckel oder Klappe ausgebildet ist.

5. Rohrreinigungssystem nach Anspruch 3 oder 4, **dadurch gekennzeichnet, dass** mindestens ein Sicherungsglied (8) zum Verriegeln des Verschlussteils (6) in seiner geschlossenen Stellung vorgesehen ist, und dass mindestens ein Schaltglied (10) zum Erfassen der Stellung des Sicherungsglieds (8) vorgesehen ist, welches in einer entsicherten Stellung des Sicherungsglieds (8) eine Aktivierung des Fremdkraftantriebs ausschließt.

6. Rohrreinigungssystem nach einem der vorstehenden Ansprüche, **dadurch gekennzeichnet, dass** die Sicherungsmittel ferner mindestens ein weiteres Schaltglied zum Überwachen eines Einfahrbereichs umfassen, in welchen das bewegliche Teil der Eintragstation beim Verfahren in seine zweite Stellung einfährt, wobei das weitere Schaltglied einen Betrieb des Fremdkraftantriebs direkt oder indirekt unterbindet, wenn im Einfahrbereich
- ein Gegenstand erfasst wird und/oder
- ein einen Zugang zum Einfahrbereich verschließendes Verschlussteil nicht in geschlossener Stellung steht und/oder
- ein zum Sichern des den Zugang zum Einfahrbereich verschließenden Verschlussteils vorgesehenes Sicherungsteil sich in einer entsicherten Stellung befindet.

7. Rohrreinigungssystem nach einem der vorstehenden Ansprüche, **dadurch gekennzeichnet, dass** das Verschlussteil als um eine Achse (A) schwenkbare Klappe (6) ausgeführt ist, deren Schließstellung mithilfe eines Sicherungshebels (8) blockierbar ist, wobei der Sicherungshebel (8) als Schaltglied ein in einer entsicherten Stellung des Sicherungshebels den Fremdkraftantrieb (5) sperrendes Schaltmittel (10) betätigt.

8. Rohrreinigungssystem nach Anspruch 7, **dadurch gekennzeichnet, dass** der Sicherungshebel (8) und die Verschlussklappe (6) gegenseitig mit Hilfe eines Kulissensystems (7, 9) mechanisch verriegelbar sind.

9. Rohrreinigungssystem nach einem der vorstehenden Ansprüche, **dadurch gekennzeichnet, dass** mindestens ein Schaltglied (10) als schaltbares Ventil ausgeführt ist, das zugleich als Schaltglied in einer den Einlege- oder Entnahmevorgang repräsentierenden Schaltstellung eine Druckmittelzufuhr zum hydraulischen oder pneumatischen Fremdkraftantrieb (5) direkt oder indirekt sperrt.

10. Rohrreinigungssystem nach Anspruch 9, **dadurch gekennzeichnet, dass** das Ventil (10) mechanisch, elektromechanisch oder elektromagnetisch schaltbar ist.

11. Rohrreinigungssystem nach einem der vorstehenden Ansprüche, **dadurch gekennzeichnet, dass** mindestens ein Schaltglied als elektrischer Schalter ausgeführt ist, der in einer den Einlege- oder Entnahmevorgang repräsentierenden Schaltstellung eine Stromzufuhr zu einem elektrischen Fremdkraftantrieb direkt oder indirekt unterbindet.

12. Dickstoffpumpe mit einer Förderleitung und mit einem in die Förderleitung eingebauten Rohrreinigungssystem nach einem oder mehreren der vorstehenden Ansprüche.

## Claims

1. A pipe cleaning system for conveyor lines with a feed station (4), which includes a component, particularly a slide valve, which is movable by an external power drive (5), with a chamber (4K) for inserting a cleaning body (11), which chamber (4K) is situated, in a first position, outside a conveyor line (2, 3) and is movable into a second position with the aid of the external power drive in order to introduce the cleaning body (11) inserted into it into the conveyor line (2, 3), wherein means (6, 8, 10) are provided for securing the movable component against being moved by the external power drive during the insertion and/or the removal of the cleaning body (11), **characterised in that** the securing means include at least one switching element (8), which detects the insertion or removal process, and at least one switching means (10), which is actuable by the latter and, in the event of a condition or signal from the at least one switching element (8) representing an insertion/ removal process, prevents movement of the chamber (4K) by the external power drive.

2. A pipe cleaning system as claimed in Claim 1, **characterised in that** the switching element is constituted by at least one sensor for detecting the presence of an article in the vicinity of the insertion opening.

3. A pipe cleaning system as claimed in Claim 1 or 2, **characterised in that** the securing means includes at least one movable valve member (6), which is movable away from a rest position for the insertion or removal of the cleaning body (11) and that at least one switching element (10) is provided for detecting a position of the valve member (6) differing from the rest position and, in this position, prevents activation of the external power drive (5).

4. A pipe cleaning system as claimed in Claim 1, 2 or 3, **characterised in that** the valve member (6) is constructed as a cover or flap closing the insertion or removal opening for the cleaning body (11).

5. A pipe cleaning system as claimed in Claim 3 or 4, **characterised in that** at least one securing element (8) is provided for locking the valve member (6) in its closed position and that at least one switching element (10) is provided for detecting the position of the securing element (8), which, in a released position of the securing element (8), prevents activation of the external power drive.

6. A pipe cleaning system as claimed in one of the preceding claims, **characterised in that** the securing means also includes at least one further switching element for monitoring an entry region, into which the movable portion of the feed station moves when moving into its second position, wherein the further switching element directly or indirectly prevents operation of the external power drive, when
- an object is detected in the entry region and/or
- a valve member closing access to the entry region is not situated in the closed position and/or
- a securing member provided for securing the valve member closing the access to the entry region is situated in a released position.

7. A pipe cleaning system as claimed in one of the preceding claims, **characterised in that** the valve member is constructed as a flap, which is pivotable about a shaft (A) and whose closed position may be blocked with the aid of a safety lever (8), wherein the safety lever (8) operates a switching means (10) which blocks the external power drive (5) in a released position of the safety lever.

8. A pipe cleaning system as claimed in Claim 7, **characterised in that** the safety lever (8) and the closure flap (6) are mutually mechanically lockable with the aid of a detent system (7, 9).

9. A pipe cleaning system as claimed in one of the preceding claims, **characterised in that** at least one switching element (10) is constructed in the form of a switchable valve, which at the same time, as a switching element in a switch position representing the insertion or removable process, directly or indirectly blocks a pressure medium supply to the hydraulic or pneumatic external power drive (5).

10. A pipe cleaning system as claimed in Claim 9, **characterised in that** the valve (10) is switchable mechanically, electromechanically or electromagnetically.

11. A pipe cleaning system as claimed in one of the preceding claims, **characterised in that** at least one switching element is constructed in the form of an electric switch which, in a switch position representing the insertion or removal process, directly or indirectly prevents a supply of electric power to an electric external power drive.

12. A viscous material pump with a conveyor line and with a pipe cleaning system as claimed in one or more of the preceding claims installed in the conveyor line.

## Revendications

1. Système de nettoyage de tuyaux pour conduites de refoulement comprenant une station de chargement (4), qui comprend un élément mobile sous l'effet d'un entraînement actionné par une force extérieure (5), en particulier une plaque, présentant une chambre (4K) pour l'insertion d'un corps de nettoyage (11), laquelle chambre (4K), dans une première position, se trouve à l'extérieur d'une conduite de refoulement (2, 3) et peut être déplacée dans une deuxième position à l'aide de l'entraînement actionné par une force extérieure afin d'introduire dans la conduite de refoulement (2, 3) le corps de nettoyage (11) inséré dans la chambre, dans lequel des moyens (6, 8, 10) sont prévus pour bloquer le déplacement de l'élément mobile sous l'effet de l'entraînement actionné par une force extérieure pendant l'insertion et/ou le retrait du corps de nettoyage (11), **caractérisé en ce que** les moyens de blocage comprennent au moins un organe de commutation (8) qui détecte le processus d'insertion ou de retrait et au moins un moyen de commutation (10), pouvant être actionné par ce dernier, qui empêche un déplacement de la chambre (4K) sous l'effet de l'entraînement actionné par une force extérieure (5) lors d'un état ou d'un signal du au moins un organe de commutation (8) représentant un processus d'insertion/de retrait.

2. Système de nettoyage de tuyaux selon la revendication 1, **caractérisé en ce que** l'organe de commutation est formé par au moins un capteur destiné à détecter la présence d'un objet dans le voisinage de l'ouverture d'insertion.

3. Système de nettoyage de tuyaux selon la revendication 1 ou 2, **caractérisé en ce que** les moyens de blocage comprennent au moins un élément de fermeture mobile (6). qui peut être déplacé hors d'une position de repos pour l'insertion ou le retrait du corps de nettoyage (11), et **en ce qu'**au moins un organe de commutation (10) est prévu pour détecter une position de l'élément de fermeture (6) différente de la position de repos et exclut dans cette position une activation de l'entraînement actionné par une force extérieure (5).

4. Système de nettoyage de tuyaux selon la revendication 1, 2 ou 3, **caractérisé en ce que** l'élément de fermeture (6) est réalisé en tant que couvercle ou clapet fermant l'ouverture d'insertion ou de retrait pour le corps de nettoyage (11).

5. Système de nettoyage de tuyaux selon la revendication 3 ou 4, **caractérisé en ce qu'**au moins un organe de blocage (8) est prévu pour verrouiller l'élément de fermeture (6) dans sa position fermée, et **en ce qu'**au moins un organe de commutation (10) est prévu pour détecter la position de l'organe de blocage (8), lequel exclut une activation de l'entraînement actionné par une force extérieure dans une position déverrouillée de l'organe de blocage (8).

6. Système de nettoyage de tuyaux selon l'une quelconque des revendications précédentes, **caractérisé en ce que** les moyens de blocage comprennent en outre au moins un autre organe de commutation pour surveiller une zone d'entrée dans laquelle rentre l'élément mobile de la station de chargement lors de son déplacement dans sa deuxième position, l'autre organe de commutation empêchant directement ou indirectement un fonctionnement de l'entraînement actionné par une force extérieure lorsque, dans la zone d'entrée
- un objet est détecté et/ou
- un élément de fermeture fermant un accès à la zone d'entrée ne se trouve pas en position fermée et/ou
- un élément de blocage prévu pour le blocage de l'élément de fermeture fermant l'accès à la zone d'entrée se trouve dans une position déverrouillée.

7. Système de nettoyage de tuyaux selon l'une quelconque des revendications précédentes, **caractérisé en ce que** l'élément de fermeture est réalisé en tant que clapet (6) pouvant tourner autour d'un axe (A), dont la position de fermeture peut être bloquée à l'aide d'un levier de blocage (8), dans lequel le levier de blocage (8), en tant qu'organe de commutation, actionne un moyen de commutation (10) bloquant l'entraînement actionné par une force extérieure (5) dans une position déverrouillée du levier de blocage.

8. Système de nettoyage de tuyaux selon la revendication 7, **caractérisé en ce que** le levier de blocage (8) et le clapet de fermeture (6) peuvent être verrouillés mécaniquement l'un par rapport à l'autre à l'aide d'un système à coulisse (7, 9).

9. Système de nettoyage de tuyaux selon l'une quelconque des revendications précédentes, **caractérisé en ce qu'**au moins un organe de commutation (10) est réalisé en tant que vanne commandable qui, également en tant qu'organe de commutation dans une position de commutation représentant le processus d'insertion ou de retrait, bloque directement ou indirectement une alimentation en agent de pression pour l'entraînement actionné par une force extérieure hydraulique ou pneumatique (5).

10. Système de nettoyage de tuyaux selon la revendication 9, **caractérisé en ce que** la vanne (10) peut être commutée par voie mécanique, électromécanique ou électromagnétique.

11. Système de nettoyage de tuyaux selon l'une quelconque des revendications précédentes, **caractérisé en ce qu'**au moins un organe de commutation est réalisé en tant que commutateur électrique qui, dans une position de commutation représentant le processus d'insertion ou de retrait, empêche directement ou indirectement une arrivée de courant dans un entraînement actionné par une force extérieure électrique.

12. Pompe à liquides épais comprenant une conduite de refoulement et un système de nettoyage de tuyaux intégré à la conduite de refoulement selon l'une quelconque ou plusieurs des revendications précédentes.
